# EUROPÄISCHE PATENTANMELDUNG

(11) **EP 1 359 259 A1**
(43) Veröffentlichungstag der Anmeldung: **05.11.2003**
(21) Anmeldenummer: 03009115.1
(22) Anmeldetag: 22.04.2003
(51) Int. Cl.: E03B 1/04

(54) **Wasserversorgungsanlage**

(30) Priorität: 18.04.2002 DE 20206082 U
(71) Anmelder: WISY AG Haustechniksysteme, Filtertechnik, 63699 Kefenrod (DE)
(72) Erfinder: Winkler, Norbert, 63699 Kefenrod (DE)
(74) Vertreter: Hebing, Norbert

(57) **Zusammenfassung**

Es wird eine Wasserversorgungsanlage (1) beschrieben, die aus einer Wasserentnahmestelle (2), einem Trinkwasserreservoir (3) und einer Regenwasserzisterne (4) besteht. Das Trinkwasserreservoir (3) und die Regenwasserzisterne (4) sind über je eine Leitung (5, 7) mit einer Wasserentnahmestelle (2) verbunden. Um zu verhindern, dass beim Nichtbetrieb einer Tauchpumpe (6) in der Regenwasserzisterne (4) Luft in die Regenwasserleitung (7) gelangt, befindet sich an der Saugseite der Tauchpumpe (6) ein Rückschlagventil (9). Die Tauchpumpe (6) selbst ist dicht ausgeführt.

## Beschreibung

Die Erfindung bezieht sich auf eine Wasserversorgungsanlage mit einer Regenwasserzisterne und einem Trinkwasserreservoir, die über eine Regenwasserleitung bzw. eine Trinkwasserleitung mit einer gemeinsamen Wasserentnahmestelle verbunden sind, wobei die Regenwasserzisterne unterhalb der Wasserentnahmestelle liegt und mit einer Tauchpumpe versehen ist, die das Wasser in der Regenwasserzisterne über die Regenwasserleitung zur Wasserentnahmestelle pumpt, und wobei die Regenwasserleitung und die Trinkwasserleitung stromaufwärts der Tauchpumpe zusammengeführt sind und in jede Leitung, bevor diese zusammengeführt sind, ein zur Wasserentnahmestelle hin öffnendes Rückschlagventil eingesetzt ist.

Eine derartige Wasserversorgungsanlage ist in der EP 1 138 836 A2 beschrieben. Das Rückschlagventil in der Regenwasserleitung ist unmittelbar vor der Zusammenführung der beiden Leitungen in jene eingesetzt. Damit wird verhindert, dass das teure Trinkwasser über die als Kreiselpumpe ausgeführte Tauchpumpe in die Regenwasserzisterne abfließt. Nachteilig an der dort gezeigten Anordnung ist es, dass in den Abschnitt der Regenwasserleitung zwischen dem Rückschlagventil und der Tauchpumpe bzw. dem Reservoir bei abgeschalteter Tauchpumpe Luft gelangt, was beim erneuten Einschalten der Pumpe zu Störungen in der Wasserversorgung führt.

In der DE 196 39 957 A1 ist eine Wasserversorgungsanlage beschrieben, bei der die geleerte Regenwasserzisterne mit Trinkwasser aufgefüllt werden kann. Die Trinkwasserleitung mündet unmittelbar in die Zisterne und mischt sich mit dem dort vorhandenen Restwasser. Die Trinkwasserleitung ist somit stromabwärts der Tauchpumpe mit dem Regenwasser führenden Bereich der Anlage verbunden.

Die Erfindung beruht somit auf dem Problem, einen störungsfreien Betrieb der Wasserversorgungsanlage zu gewährleisten, insbesondere soll vermieden werden, dass Luft zur Wasserentnahmestelle gelangt.

Zur Lösung des Problems sieht die Erfindung eine Wasserversorgungsanlage mit den Merkmalen des Oberbegriffs des Anspruchs 1 und mit den weiteren Merkmalen vor, dass die Tauchpumpe wasserdicht ausgeführt ist und dass das Rückschlagventil in der Regenwasserleitung zwischen der Saugseite der Pumpe und der Ansaugöffnung der Regenwasserleitung angeordnet ist.

Das Rückschlagventil hält somit die Wassersäule in der Regenwasserleitung zurück. Dazu muss die Pumpe entgegen der üblichen Ausführung von solchen Tauchpumpen dicht, d. h. hermetisch geschlossen ausgeführt sein, damit das Wasser in der Regenwasserleitung nicht über undichte Stellen an der Tauchpumpe abfließt. Normalerweise werden nämlich gewisse Undichtigkeiten an der Tauchpumpe hingenommen, da das austretende Wasser zurück in die Zisterne fließt und damit nicht verloren ist. Zwar ist damit der Wirkungsgrad der Tauchpumpe nicht voll ausgeschöpft. Aber auch das wird hingenommen, da der zusätzlich zu betreibende Bauaufwand zum Dichten der Pumpe den Gewinn an Pumpenleistung nicht rechtfertigt.

Da gemäß der Erfindung das Wasser in der Regenwasserleitung zurückgehalten wird, kann keine Luft eindringen. Damit ist der luftblasenfreie Betrieb der Wasserversorgungsanlage gewährleistet.

Das Rückschlagventil in der Regenwasserleitung ist vorzugsweise in einer Patrone untergebracht, die in den Ansaugstutzen der Tauchpumpe eingesetzt ist. Solche Patronen sind handelsüblich und können z. B. in den Ansaugstutzen eingeschraubt werden. Die Anlage ist somit schnell und einfach zu realisieren.

Üblicherweise schließt sich an den Ansaugstutzen der Tauchpumpe noch ein Stück Saugleitung an, die einen Abschnitt der Regenwasserleitung bildet. Damit sich in diesen Abschnitt keine Luft sammeln kann, wird dieser vom Rückschlagventil ausgehend stetig nach oben gerichtet verlegt. Dies kann z. B. mit Hilfe eines Schwimmers am Ende der Leitung geschehen, was auch den Vorteil hat, dass das angesaugte Wasser unterhalb des Wasserspiegels in der Zisterne entnommen wird, und damit nicht mit Ablagerungen belastet ist. Da die Saugleitung somit stets nach oben gerichtet ist, kann sich dort ebenfalls keine Luft halten.

Zur Verdeutlichung der Erfindung wird im Folgenden ein Ausführungsbeispiel an Hand von zwei Figuren näher dargestellt. Es zeigen:
- Fig. 1:: Eine schematische Darstellung einer Wasserversorgungsanlage und
- Fig. 2:: Die perspektivische Sicht auf eine Tauchpumpe.

Die Wasserversorgungsanlage, die als ganzes mit 1 bezeichnet ist besteht aus einer Wasserentnahmestelle 2, einem Trinkwasserreservoir 3 und einer Regenwasserzisterne 4. Das Trinkwasserreservoir 3 liegt oberhalb der Wasserentnahmestelle 2 und ist mit dieser mittels einer Trinkwasserleitung 5 verbunden. Ein Wassernachlauf 3' sorgt dafür, dass stets ausreichend Trinkwasser im Trinkwasserreservoir 3 vorhanden ist. In der Regenwasserzisterne 4, die sich unterhalb der Wasserentnahmestelle 2 befindet, ist eine Tauchpumpe 6 innerhalb einer Regenwasserleitung 7 angeordnet, die die Regenwasserzisterne 4 mit der Wasserentnahmestelle 2 verbindet. Die Tauchpumpe saugt Regenwasser aus der Regenwasserzisterne 4 an und fördert es zur Wasserentnahmestelle 2. Die beiden Leitungen 5, 7 laufen vor der Wasserentnahmestelle 2 zusammen. Um zu verhindern, dass Regenwasser in das Trinkwasserreservoir 3 gelangt, ist in der Trinkwasserleitung 5 vor der Zusammenführung der Leitungen 5, 7 ein Rückschlagventil 8 angeordnet, das zum Trinkwasserreservoir 3 hin sperrt, aber einen Wasserfluß von dort erlaubt.

Ein entsprechendes Rückschlagventil 9 ist im Saugabschnitt 10 der Regenwasserleitung 7 an der Saugseite der Tauchpumpe 6 angeordnet. Die Tauchpumpe 6 ist dicht ausgeführt, so dass das Rückschlagventil 9 den Rückfluss der Wassersäule aus der Regenwasserleitung 7 zurück in die Regenwasserzisterne 4 verhindert. Dies wäre ansonsten mit der Aufnahme von Luft in die Regenwasserleitung 7 verbunden, was durch die Anordnung des Rückschlagventils 9 an der Saugseite der Tauchpumpe 6 verhindert ist.

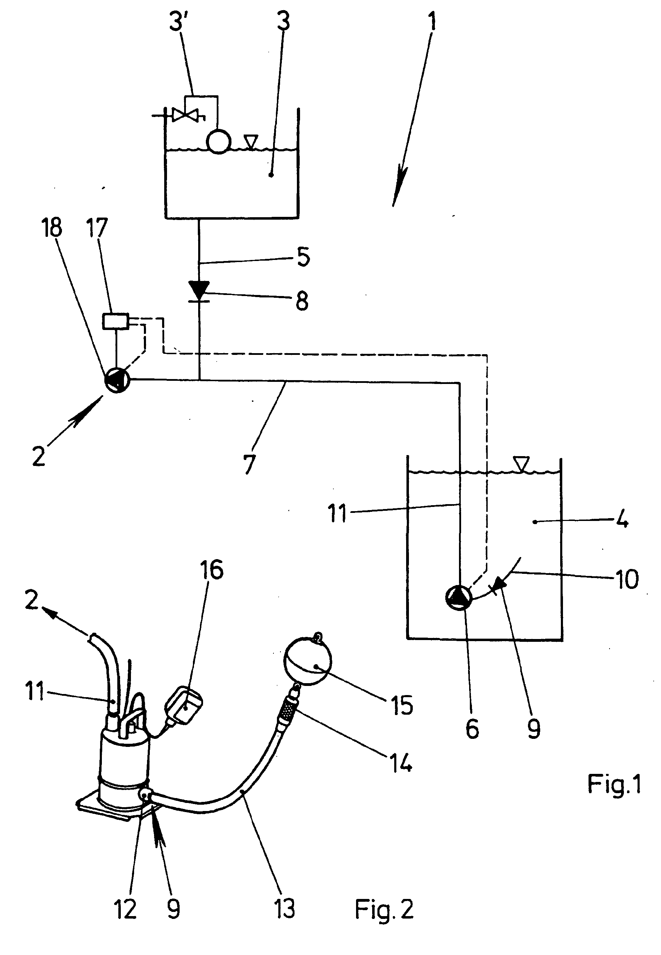

Fig. 2 zeigt die Tauchpumpe 6. Ihr Druckanschluss am oberen Ende des Gehäuses ist über den Druckabschnitt 11 der Regenwasserleitung 7 mit der Wasserentnahmestelle 2 verbunden. Ihr Sauganschluss 12 ist mit dem Rückschlagventil in der Regenwasserleitung 7 versehen, was hier nicht näher dargestellt ist. Ein Schlauch 13 ist an das Rückschlagventil 9 angeschlossen und am anderen Ende mit einem Filter 14 versehen, an dem wiederum ein Schwimmer 15 befestigt ist, der den Schlauch 13 stets oben hält, so dass sich keine Schlaufen bilden, in denen sich Luft sammeln könnte.

Ein Füllstandsschalter 16 an der Tauchpumpe 6 sorgt dafür, dass diese nur eingeschaltet werden kann, wenn ausreichend Regenwasser in der Regenwasserzisterne 4 vorhanden ist.

Die Wasserentnahmestelle 2 ist mit einem Schalter 17 versehen, der sowohl eine Pumpe 18 an der Wasserentnahmestelle 2 als auch die Tauchpumpe 6 einschaltet, soweit dies der Füllstandsschalter 16 erlaubt.

### Bezugszeichenliste

- 1: Wasserversorgungsanlage
- 2: Wasserentnahmestelle
- 3: Trinkwasserreservoir
- 3': Wassernachlauf
- 4: Regenwasserzisterne
- 5: Trinkwasserleitung

- 6: Tauchpumpe
- 7: Regenwasserleitung
- 8: Rückschlagventil
- 9: Rückschlagventil
- 10: Saugabschnitt

- 11: Druckabschnitt
- 12: Sauganschluss
- 13: Schlauch
- 14: Filter
- 15: Schwimmer

- 16: Füllstandsschalter
- 17: Schalter
- 18: Pumpe

## Patentansprüche

1. Wasserversorgungsanlage mit einer Regenwasserzisterne und einem Trinkwasserreservoir, die über eine Regenwasserleitung bzw. eine Trinkwasserleitung mit einer gemeinsamen Wasserentnahmestelle verbunden sind, wobei die Regenwasserzisterne unterhalb der Wasserentnahmestelle liegt und mit einer Tauchpumpe versehen ist, die das Wasser in der Regenwasserzisterne über die Regenwasserleitung zur Wasserentnahmestelle pumpt, und wobei die Regenwasserleitung und die Trinkwasserleitung stromaufwärts der Tauchpumpe zusammengeführt sind und in jede Leitung, bevor sie zusammengeführt sind, ein zur Wasserentnahmestelle hin öffnendes Rückschlagventil eingesetzt ist, **dadurch gekennzeichnet, dass** die Tauchpumpe wasserdicht ausgeführt ist und dass das Rückschlagventil in der Regenwasserleitung zwischen der Saugseite der Pumpe und der Ansaugöffnung der Regenwasserleitung angeordnet ist.

2. Wasserversorgungsanlage nach Anspruch 1, **dadurch gekennzeichnet, dass** das Rückschlagventil in der Regenwasserleitung in einem Gehäuse untergebracht ist, das in den Ansaugstutzen der Tauchpumpe eingesetzt ist.

3. Wasserversorgungsanlage nach Anspruch 1 oder 2, **dadurch gekennzeichnet, dass** der Abschnitt der Regenwasserleitung vor dem Rückschlagventil vom Rückschlagventil ausgehend stetig nach oben gerichtet verlegt ist.
